# EUROPEAN PATENT APPLICATION

(11) **EP 2 031 591 A1**
(43) Date of publication of application: **04.03.2009**
(21) Application number: 08162578.2
(22) Date of filing: 19.08.2008
(51) Int. Cl.: G11B 20/00, G11B 27/11, G06F 21/00

(54) **Recording apparatus, recording method, and server apparatus**

(30) Priority: 31.08.2007 JP 2007225891
(71) Applicant: Kabushiki Kaisha Toshiba, Minato-ku Tokyo 105-8001 (JP)
(72) Inventor: Haruki, Koskue, Tokyo 105-8001 (JP); Kambayashi, Toru, Tokyo 105-8001 (JP); Kato, Taku, Tokyo 105-8001 (JP); Ishihara, Atsushi, Tokyo 105-8001 (JP); Aruga, Hideo, Tokyo 105-8001 (JP)
(74) Representative: Henkel, Feiler & Hänzel

(57) **Abstract**

A recording apparatus includes a receiving section (10-1, S62) which receives a stream and address information indicating an encryption target region of the stream, and a recording section (19, S71) which records the stream on each sector of a recording medium and records management information on a sector header of the sector where data on the encryption target region is recorded.

## Description

The present invention relates to a recording apparatus and a recording method which receive a stream and address information indicating an encryption target region of the stream to record management information on a sector of a recording medium where data on the encryption target region is recorded, and a server apparatus which supplies the stream.

As is well-known, as a standard applied to recording processing on the next generation recording medium, Advanced Access Control System (AACS) Standards and the like are known. JP-A-2007-013440 provides a media key generating method which can reduce processing load required for generation of media key when media on which content whose copyright has been protected by AACS have been recorded is played.

In the prior art such as shown in the above publication, however, when a stream conforming to AACS Standards is downloaded and encryption such as BusEncryption (BE) is performed to record the stream on an optical disc, an application which has received the stream must acquire information of a BE flag from a file of CONTENT_CERT.AACS. Accordingly, the file of CONTENT_CERT.AACS is detected from the downloaded image file and whether or not the BE flag is contained in the file is determined. When the BE flag is found in the file, ".EVO file" is searched for, the logical block address (LBA) of EVO file is acquired, and an LBA list for setting the BE flag is prepared. Regarding data on an encryption target region in the stream, the BE flag must be recorded on a sector header.

However, the work is a much highly-loaded work for an application downloading the stream, which results in difficulty in smooth processing.

An object of the present invention is to provide a recording apparatus and a recording method which can record a downloaded stream, especially, an encryption target region thereof, on an optical disc smoothly, and a server apparatus.

According to one embodiment for solving the above problem, a recording apparatus provides a receiving section which receives a stream and address information indicating an encryption target region of the stream, and recording sections which records the stream on each sector of a recording medium and records management information on a sector header of a sector on which data on the encryption target region is recorded.

A stream and an LBA management table showing address information of a BE encryption target region of the stream are downloaded from a server apparatus to an application. Thereby, a step with such a high load that the application searches for ".EVO file" to generate an LBA list is made unnecessary so that smooth recording processing to an optical disc or the like is made possible.

The invention can be more fully understood from the following detailed description when taken in conjunction with the accompanying drawings, in which:
FIG. 1 is a diagram showing a configuration example of a recording system according to one embodiment of the present invention;
FIG. 2 is a block diagram showing a configuration of a recording apparatus according to one embodiment of the present invention;
FIG. 3 is a diagram showing a structure example of a BE-compliant content image handled by the recording apparatus according to one embodiment of the present invention;
FIG. 4 is a diagram showing a data structure example of the BE-compliant content handled by the recording apparatus according to one embodiment of the present invention;
FIG. 5 is a flowchart showing a playing method example of content of the recording apparatus according to one embodiment of the present invention;
FIG. 6 is a diagram showing another example of an image structure of the BE-compliant content handled by the recording apparatus according to one embodiment of the present invention;
FIG. 7 is a flowchart showing one example of a recording method of the recording system according to one embodiment of the present invention;
FIG. 8 is a flowchart showing one example of a recording method including cipher decoding processing of the recording system according to one embodiment of the present invention;
FIG. 9 is a diagram showing one example of an LBA management table supplied by the recording system according to one embodiment of the present invention;
FIG. 10 is a flowchart showing one example of the recording method of the recording system according to one embodiment of the present invention; and
FIG. 11 is a flowchart showing one example of the recording method including the cipher decoding processing of the recording system according to one embodiment of the present invention.

An embodiment of the present invention will be explained in detail below with reference to the drawings.

### <One Example of Configuration of Recording System according to one Embodiment of the Invention>

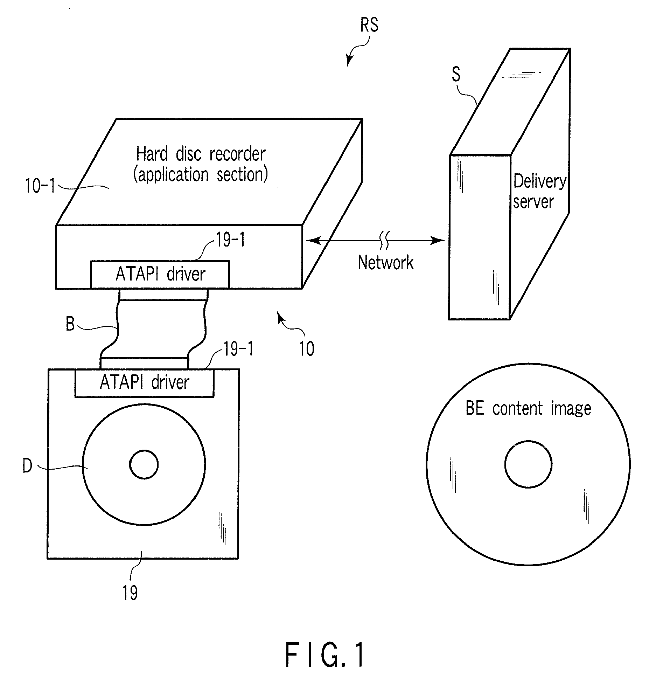

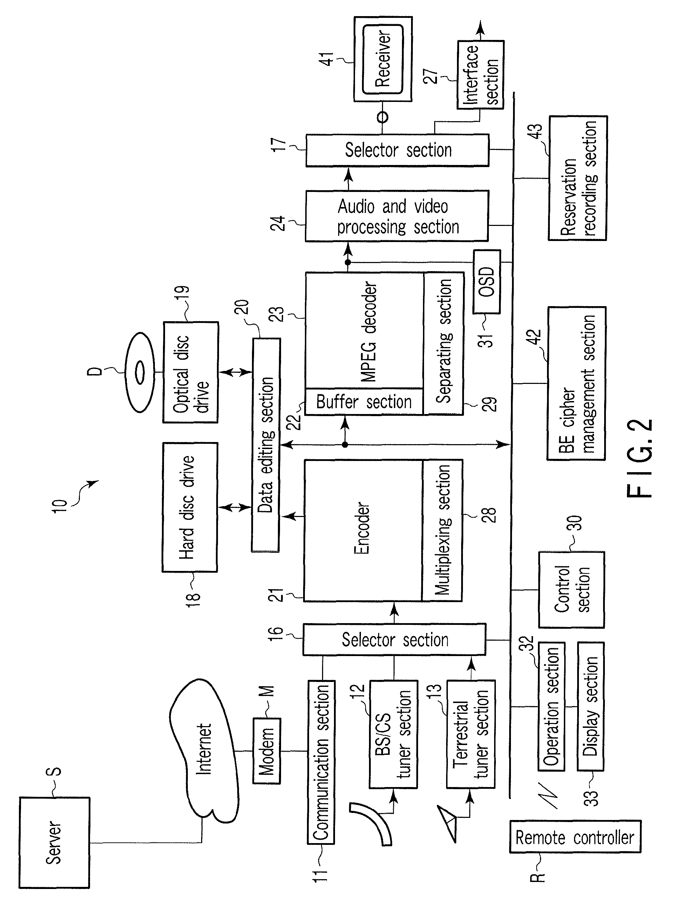

FIG. 1 shows a configuration example of a recording system according to one embodiment of the present invention. FIG. 2 is a block diagram showing a configuration of a recording apparatus.

As shown in FIG. 1, a recording system RS according to one embodiment of the present invention includes a delivery server S which delivers a BE content image and a hard disc recorder 10 connected to the delivery server S via a network such as Internet. The hard disc recorder 10 includes an application 10-1 which conducts recording processing and playing processing and an optical disc drive 19 connected to a processing circuit of the hard disc recorder 10 via a bus B. The optical disc drive 19 and the application section 10-1 conduct data transfer via the bus B using an ATAPI driver 19-1. Incidentally, in the embodiment, stream data of video content including an encrypted region is referred to as "content image".

### (Configuration of Hard Disc Recorder 10)

Next, a configuration example of the hard disc recorder 10 will be explained with reference to FIG. 2. The hard disc recorder 10 includes two kinds of disc drives. First, the hard disc recorder 10 includes an optical disc drive 19 which rotationally drives an optical disc D functioning as first media, which is an information recording medium which can establish a video file to conduct write and read of information. Here, the optical disc D is an HD DVD as one example, but it is not limited to this HD DVD. The hard disc recorder 10 includes a hard disc drive 18 which drives a hard disc serving as second media. A control section 30 is connected to each section via the bus B to control operations of a whole apparatus.

The hard disc recorder 10 includes an encoder 21 configuring a recording side, an MPEG decoder 23 configuring a playing side, and the control section 30 controlling operations of an apparatus main body as main configuration elements. The hard disc recorder 10 includes an input side selector section 16 and an output side selector section 17, where the input side selector section 16 is connected with a communication section 11 such as LAN, a satellite broadcasting (BS/CS) tuner section 12, and a terrestrial tuner section 13 to output a signal to the encoder 21. The BS/CS tuner section 12 is connected with a satellite antenna and the terrestrial tuner section 13 is connected with a terrestrial antenna. The hard disc recorder 10 includes the encoder 21, a data editing section 20 receiving an output of the encoder 21 to perform desired data processing such as data edition, the hard disc drive 18 connected to the data editing section 20, and the optical disc drive 19. Further, the hard disc recorder 10 includes the hard disc drive 18, the MPEG decoder 23 receiving a signal from the optical disc drive 19 to decode the same, the encoder 21, a buffer section 22, a multiplexing section 28, a separating section 29, an OSD section 31 synthesizing a desired video to a vide screen, a BE cipher management section 42 performing BE encrypting processing and decoding processing described later, and the like, and a reservation recording section 43 producing a reservation list and a program table image. The each section is connected to the control section 30 via the bus B. Further, an output end of the selector section 17 is connected to an external receiver 41 or it is supplied to an external device via an interface section 27 for conducting communication with the external device.

Incidentally, the application section 10-1 shown in FIG. 1 corresponds to a playing function and a recording function and it corresponds to a configuration including the control section 30, the BE cipher management section 42, the encoder 21, the MPEG decoder 23, and the like in FIG. 2.

Further, the hard disc recorder 10 includes an operation section 32 receiving an operation of a user and an operation of a remote controller R. The remote controller R allows operations approximately equivalent to an operation section 32 provided on a main body of the hard disc recorder 10, and it allows various settings such as recording and playing instructions and edition instructions to the hard disc drive 18 and the optical disc drive 19, an operation on the tuners, and setting of reservation recording.

### (Basic Operations)

In the hard disc recorder 10 with such a configuration, playing processing and recording processing will be briefly explained using an optical disc as an example. That is, an optical disc D rotated at a predetermined speed under control of the control section 30 is irradiated with laser light, reflected light from the optical disc D is detected by an optical pickup and a detection signal based upon the detection is output. An RF signal is produced based upon the detection signal so that playing processing is performed after reading processing of data.

In recording processing of the optical disc, data supplied, for example, from an input section (not shown) via the selector section 16 under control of the control section 30 is supplied to the encoder 21 to be coded and output. Driving current of a laser driver corresponding to the coded output signal and an output signal of the control section 30 is supplied to the optical pickup. Recording processing is performed by irradiation of laser light corresponding to the driving current on a storage region on the optical disc D.

### <EB encrypting processing of Recording System according to one Embodiment of the Invention>

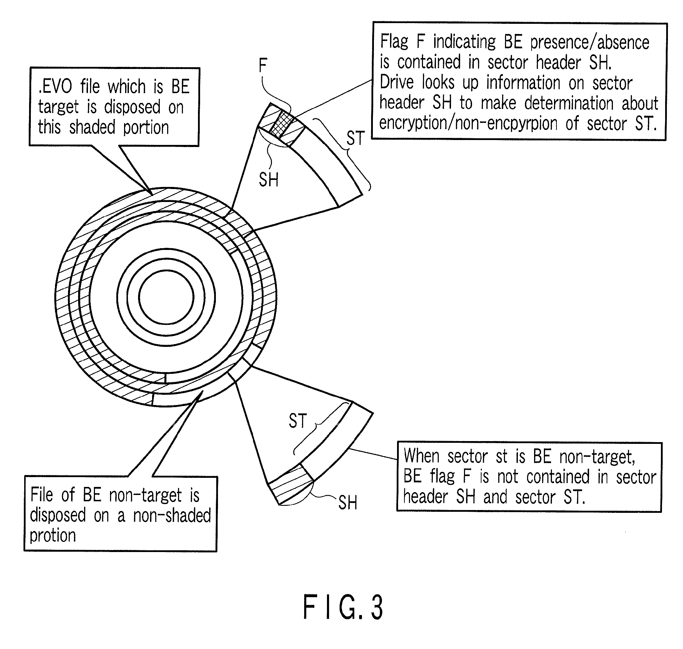

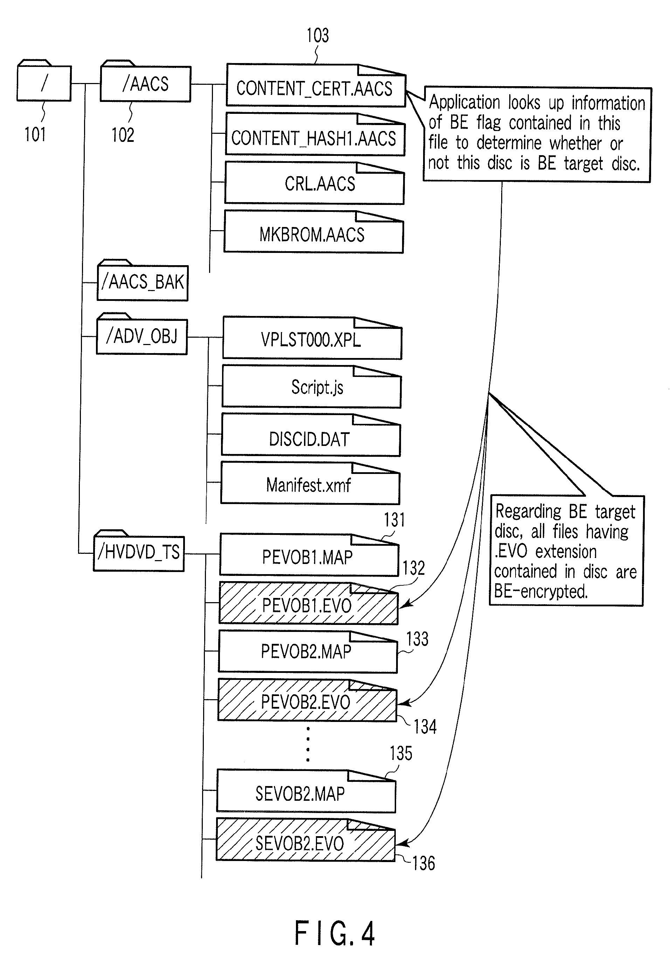

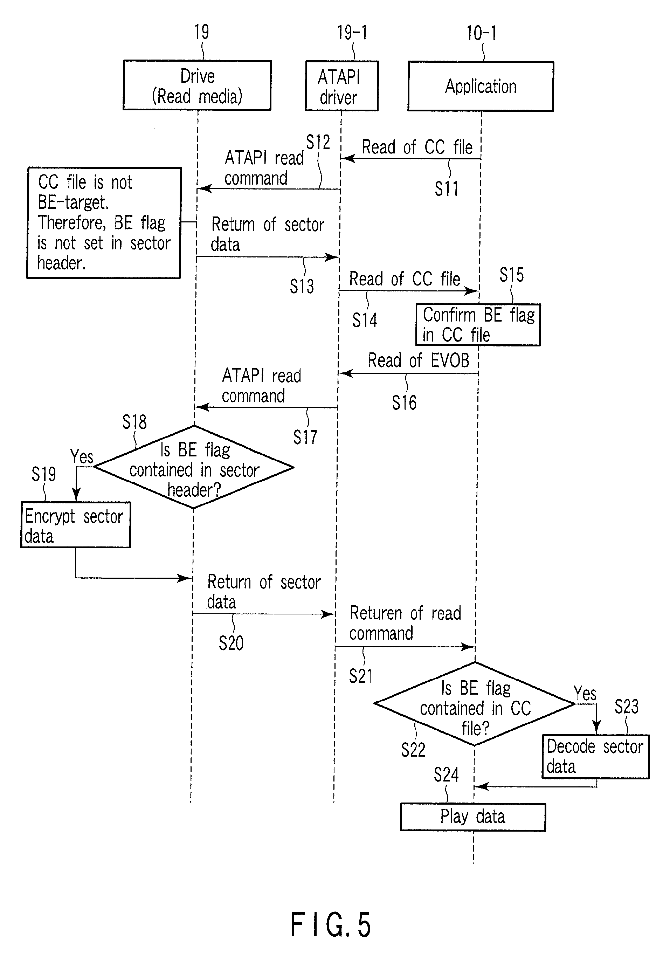

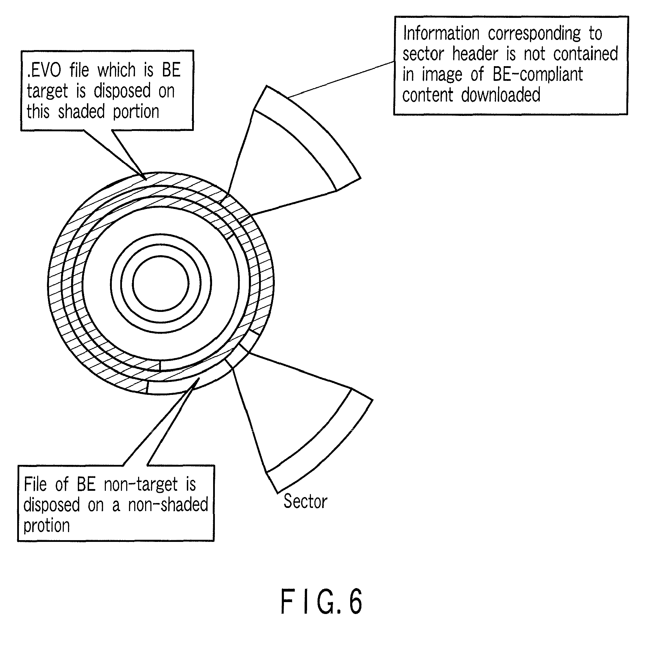

FIG. 3 shows a structure example of a BE-compliant content image handled by the recording apparatus according to one embodiment of the present invention. FIG. 4 shows a data structure example of BE-compliant content handled by the recording apparatus. FIG. 5 is a flowchart showing one example of a playing method of content of the recording apparatus. FIG. 6 shows another example of an image structure of BE-compliant content handled by the recording apparatus.

Incidentally, each step in flowchart shown in FIGS. 5, 7, 8 and 11 described below can be replaced by circuit blocks, and therefore all steps shown in the each flowchart can be re-defined as blocks.

Bus Encryption (BE) function performed by the hard disc recorder 10 of the recording system RS which is an embodiment of the present invention will be explained below.

In AACS standards, BE function has been proposed as a novel function. The BE function is an encrypting and decoding function provided for protection from an action where an unauthorized third party illegally copies content data from the bus B or the like. The BE function is a function which performs data transfer while decoding data encrypted in the optical disc drive 19 by the BE cipher management section 42 in the application section 10-1 using a private or secret key shared by the optical disc drive 19 and the application section 10-1 when HD DVD-ROM/R media or the like is played.

The BE function includes a data transfer function serving when data encrypted in the BE cipher management section 42 is decoded and recorded in the optical disc drive 19 in recording of stream data on R media or the like.

When the BE function is applied to content data of HD DVD-VIDEO Standards, as shown in FIG. 4, files configuring a BE encryption target are only files 132, 134, and 136 having ".EVO extension".

It should be noted that a method where the optical disc drive 19 discriminates a BE encryption target region is different from a method where the application section 10-1 discriminates the BE encryption target region in the following manner.

### (Method where optical disc drive 19 discriminates BE encryption target region)

Content data of HD DVD-VIDEO Standards including a BE encryption target region has a sector structure as shown in FIG. 3 regarding the optical disc D, that is, it has a sector header SH at a distal end of a sector ST, and flag information F has been recorded on the sector header SH.

The optical disc drive 19 refers to flag information F indicating BE presence/absence written within the sector header SH shown in FIG. 3 to discriminate a BE encryption target region to which BE encryption should be performed.

### (Method where application section 10-1 discriminates BE encryption target region)

On the other hand, the application section 10-1 cannot refer to information on the sector header SH. FIG. 4 shows a file configuration of BE-compliant content downloaded, for example, via the Internet. As shown in FIG. 4, in AACS Standards, flag information indicating whether or not the content is BE target content is described in content_certification file (CC file) 103 positioned downstream AACS 102 positioned downstream a root 101. Accordingly, when the flag information is valid (BE target content), the application section 10-1 recognizes that all ".EVO file" 132, 134, and 136 on the media are BE encryption target regions to perform processing such as BE decoding.

It is understood that, when content including a BE encryption target region is recorded on a recording medium, it is necessary to correctly record the flag information F on the sector header SH of the sector ST on the recording medium where ".EVO file" is disposed.

### (Method for conducting playing while conducting BE encryption at optical disc drive 19 and conducting BE decoding at application section 10-1)

Playing processing of content data performed via BE encrypting and decoding will be explained in detail with reference to a flowchart shown in FIG. 5. FIG. 5 shows playing processing of content data recorded on an optical disc.

First, the application section 10-1 transmits a read command of a CC file (Step S11). The ATAPI driver 19-1 supplies an ATAPI read command (Step S12). The optical disc drive 19 performs return (transfer) of sector data to the ATAPI driver 19-1 (Step S13).

The ATAPI driver 19-1 returns the sector data back to the application section 10-1, while the application section 10-1 performs read of the CC file (Step S14). That is, the application section 10-1 cannot read a sector header SH, and it can only read data stored in the sector, as shown in FIG. 6. Therefore, the application section 10-1 confirms a BE flag within the CC file (Step S15).

The application section 10-1 performs reading processing of EVOB (Step S16). The ATAPI driver 19-1 supplies an ATAPI read command to the optical disc drive 19 (Step S17). The optical disc drive 19 determines whether or not a BE flag is contained in the sector header (Step S18). As a result, when the BE flag is contained in the sector header, the optical disc drive 19 encrypts the sector data (Step S19). Unless the BE flag is contained in the sector header, the sector data is returned back to the application section 10-1 without encrypting the sector data (Step S20). The read command returns back to the application (Step S21).

The application section 10-1 determines whether or not a BE flag is contained in the CC file (Step S22). When the BE flag is contained in the CC file, the application section 10-1 decodes the sector data (Step S23) and plays the decoded data. Unless the BE flag is contained in the CC file, the application section 10-1 plays the decoded data without decoding the sector data (Step S24).

As described above, the playing processing of the content stream data via the BE encrypting and decoding can be performed.

### <Recording processing which does not use LBA management table>

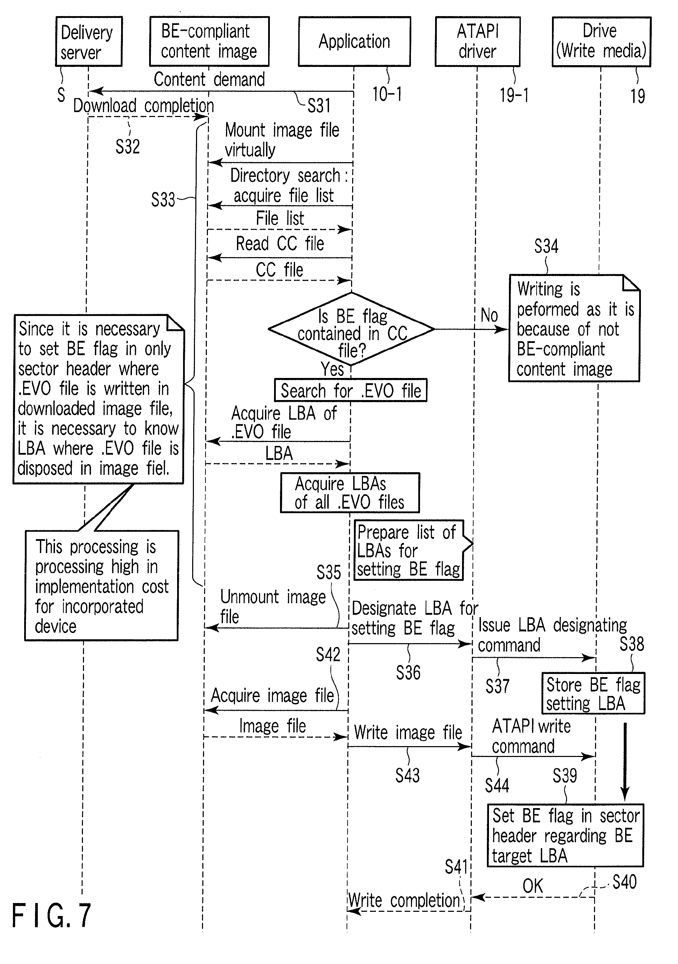

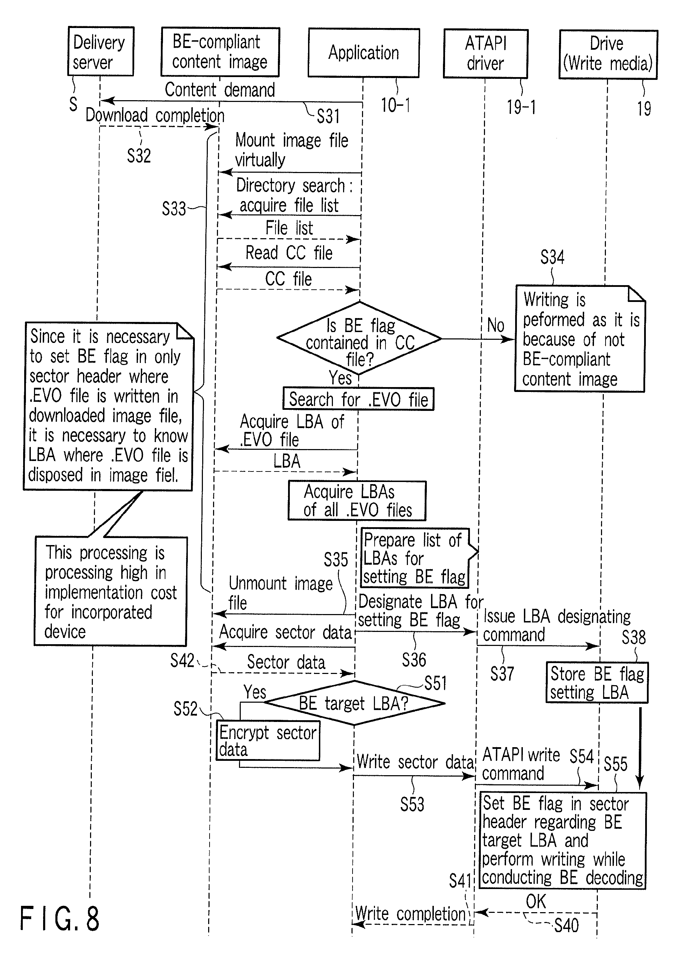

Next, an operation for supplying a stream from the delivery server S to conduct recording processing of the stream in the application section 10-1 such as the hard disc recorder 10 without using a Logical Block Address (LBA) management table (described later) according to one embodiment of the present invention will be explained using a flowchart. FIG. 7 is a flowchart showing one example of a recording method of the recording system according to one embodiment of the present invention. FIG. 8 is a flowchart showing one example of a recording method including cipher decoding processing in the recording system.

### (Case that encrypting and decoding processing is not performed)

First, the application section 10-1 issues content demand to the delivery server S via a network or the like (Step S31). The delivery server S downloads the stream via the network and notifies the application of download completion when the download has been completed (Step S32).

The application section 10-1 is required to set a BE flag to only a sector header of a sector where ".EVO file" has been written in the downloaded image file. Therefore, it is necessary to know the logical block address (LBA) where ".EVO file" is disposed in the downloaded image file.

The processing step is particularly configured as Step S33 comprising a plurality of steps. That is, the application section 10-1 demands the delivery server S to virtually mount an image file on a storage region, search for a directory of the image file, and acquire a file list. The application section 10-1 acquires the file list from the image file and acquires a CONTENT_CERT. AACS file 103 (CC file) shown in FIG. 4. The application section 10-1 determines whether or not a BE flag is contained in the CC file.

When the application section 10-1 determines that the BE flag is not contained in the CC file, the content is not a BE-compliant content image, so that the stream data is recorded on the optical disc D as it is (Step S34).

However, when the application section 10-1 determines that the BE flag is contained in the CC file, it searches for ".EVO file" from the file list and acquires the logical block address (LBA) of ".EVO file" from the BE-compliant content image. The application section 10-1 produces a list of LBAs for setting a BE flag.

Further, after the application section 10-1 unmounts the image file (Step S35), it designates a LBA for setting a BE flag in the ATAPI driver 19-1 (Step S36). The ATAPI driver 19-1 issues an LBA designating command to the optical disc drive 19 (Step S37). The optical disc drive 19 sets a BE flag to store the LBA (step S38).

On the other hand, the application section 10-1 acquires a BE-compliant content image (Step S42) and instructs the ATAPI driver 19-1 to conduct writing of the image file (Step S43). The ATAPI driver 19-1 supplies an ATAPI write command to the optical disc drive 19 (Step S44). Regarding the BE target LBA, the optical disc drive 19 sequentially records the stream data in the sector based upon the BE flag setting LBA in Step S38 while recording flag information F on the sector header SH shown in FIG. 3 (Step S39).

When these steps are completed, the optical disc drive 19 supplies a completion signal to the ATAPI driver 19-1 (Step S40), and the ATAPI driver 19-1 supplies a write completion signal to the application section 10-1 (Step S41). Thus, the stream supplied from the delivery server S is recorded on the optical disc D by the optical disc drive 19.

In a series of steps shown by the above Step S33, it is not so highly-loaded task to acquire the LBA information from the content image under such an environment that a technique of a virtual drive such as a PC device has been developed. In an incorporated device such as a head disc recorder with a built-in optical disc drive, however, since the series of steps such as described in Step S33 is generally a very highly-loaded task, such a problem occurs that it is difficult to conduct recording processing smoothly from downloading of a stream.

Incidentally, in a flowchart shown in FIG. 7, the BE encrypting and decoding processing is not performed. This is because of such a thought that a structure of the hard disc recorder 10 is relatively secure so that the stream is safe even if the BE encrypting and decoding processing putting a burden on the processing is omitted.

However, when a recording and playing apparatus such as the hard disc recorder 10 is, for example, a PC (personal computer) and it is determined that the PC is exposed to the threat of illegal content acquisition conducted by a third party, security is ensured by performing the original BE encrypting and decoding processing, as shown in flowchart in FIG. 8.

### (Case that encrypting and decoding processing is performed)

Next, an encrypting and decoding processing performed when it is determined that a PC or the like is exposed to the threat of illegal content acquisition conducted by a third party will be explained with reference to a flowchart shown FIG. 8. Here, explanation of steps common to those in the flowchart shown in FIG. 7 is omitted and explanation of only a different step(s) will be made.

That is, in Step S42, the application section 10-1 acquires sector data of a BE-compliant content image, and when the application section 10-1 determines, based upon the previously prepared LBA list, that the sector data is data on an encryption target region (Step S51), it encrypts the sector data in the BE cipher management section 42 and the like (Step S52). However, when the application section 10-1 determines based upon the LBA list that the sector data is data on a non-encryption target region, encryption of the sector data is not performed.

Next, the application section 10-1 supplies the sector data to the ATAPI driver 19-1 and the ATAPI driver 19-1 supplies an ATTAPI write command to the optical disc drive 19 (Step S54). When the optical disc drive 19 determines, based upon the BE flag setting LBA stored in Step S38, that the sector data is the BE target LBA, it sets flag information F to a sector header SH of the sector data. The optical disc drive 19 sequentially conducts BE decoding of the encrypted sector data supplied to record the decoded sector data in a predetermined sector (Step S55).

By performing the BE encrypting and decoding processing to the stream data on the encryption target region, security of the stream data is ensured.

### <Recording processing using LBA management table of recording system according to one embodiment of the present invention>

In the abovementioned recording system, however, the application section 10-1 is required to conduct a much highly-loaded task or processing such as reading the CC file from the BE-compliant content image, detecting the BE flag, searching for ".EVO file", and producing the LBA list based upon the searching as shown in Step S33. Therefore, in an apparatus which does not have sufficient processing capacity or ability, it becomes difficult to perform a smooth recording processing.

In the recording system according to one embodiment of the present invention, the delivery server S prepares a management table of the BE target LBA which is address information for discrimination between an encryption target region and a non-encryption target region in a stream and it supplies the management table as well as the content to the application section 10-1. As a result, since the application section 10-1 is not required to perform highly-loaded processing or task such as shown in Step S33, smooth and rapid recording processing to the recording medium is made possible.

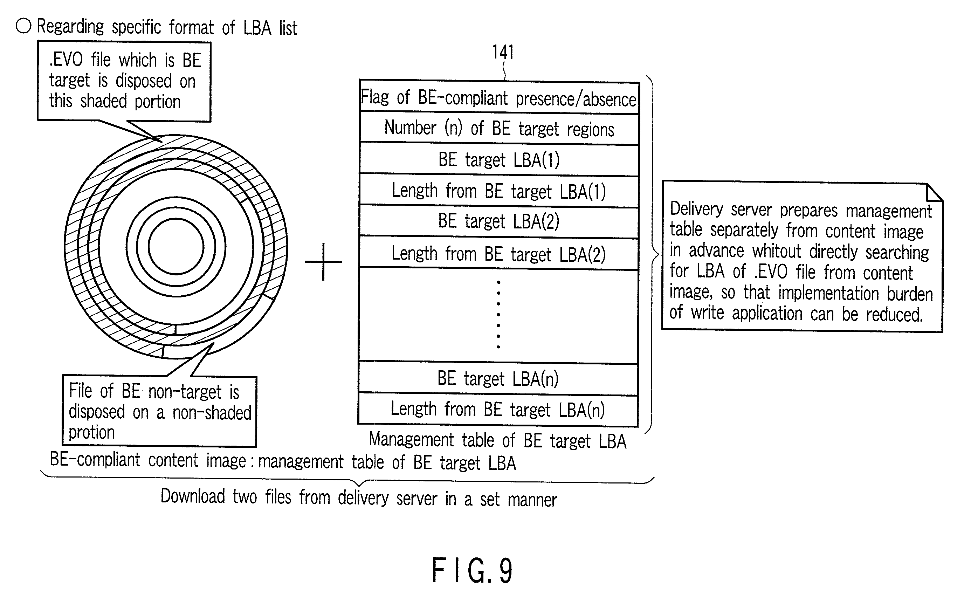

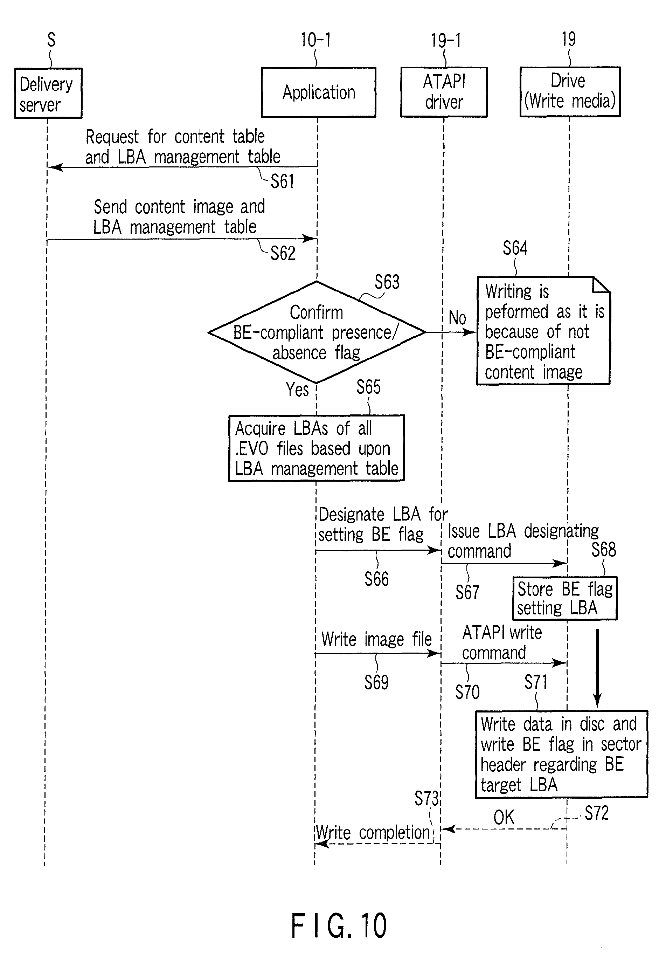

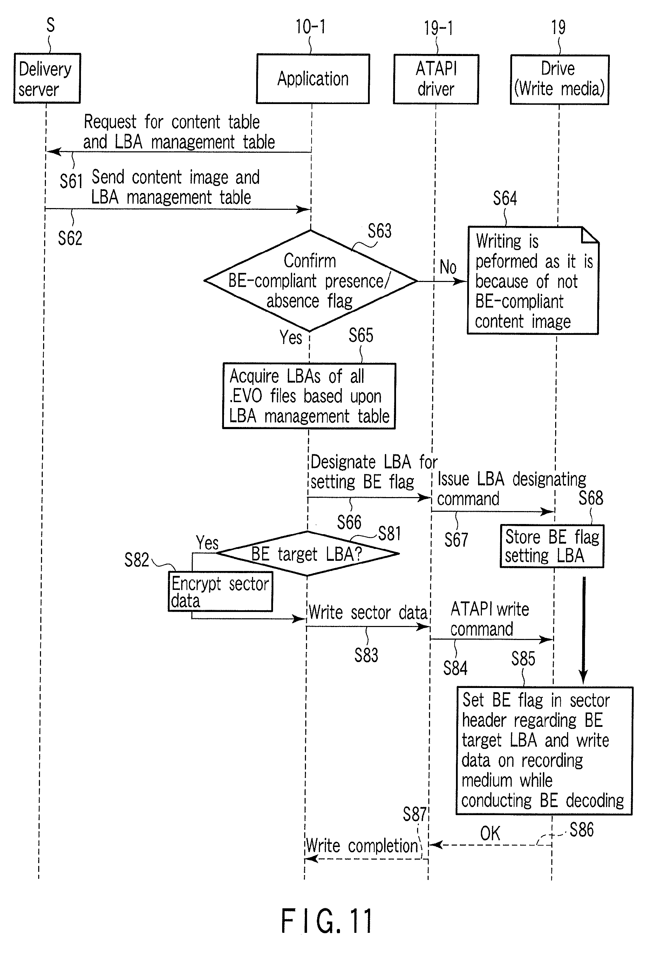

A recording processing using an LBA management table of the recording system according to an embodiment of the present invention will be explained in detail below with reference to the drawings. FIG. 9 shows an LBA management table example supplied by the recording system. FIG. 10 is a flowchart showing one example of the recording method of the recording system. FIG. 11 is a flowchart showing one example of a recording method including a cipher decoding processing in the recording system.

First, a management table 141 of BE-compliant LBA together with the BE-compliant content image supplied from the delivery server S is shown in FIG. 9. A flag of BE-compliant presence/absence, the number (n) of BE target regions, BE-compliant LBA (1), for example, and a length from the BE target LBA (1) are shown in the management table 141, respectively. When the delivery server prepares a management table separately from a content image in advance even without directly searching for LBA of ".EVO file" from the content image, an implementation load of a write application can be reduced by the management table 141 of LBA.

### (Case that encrypting and decoding processing is not performed)

Next, processing for recording data on an optical disc without performing BE encrypting and decoding processing will be explained with reference of a flowchart shown in FIG. 10.

The application section 10-1 of the hard disc recorder 10 requests the delivery server S to provide the content image and the LBA management table via a network or the like (Step S61). In response to the request, the delivery server S supplies the content image and the management table 141 of LBA shown in FIG. 9 to the application section 10-1 (Step S62).

The application section 10-1 performs confirmation of a BE-compliant presence/absence flag (FIG. 9) to the LBA management table 141 (Step S63), and it records the stream data on the optical disc D as it is when it is determined that the content is not BE-compliant (Step S64).

When the application section 10-1 determines that the BE-compliant presence/absence flag is valid referring to the management table 141 of LBA, it acquires LBAs of all ".EVO extension" files based upon the management table 141 of LBA (Step S65). The application section 10-1 designates LAB setting a BE flag (Step S66). The ATAPI driver 19-1 issues an LBA designating command to the optical disc drive 19 (Step S67). The optical disc drive 19 stores a BE flag setting LBA therein (Step S68).

On the other hand, the application section 10-1 writes an image file in the ATAPI driver 19-1 (Step S69). The ATAPI driver 19-1 supplies an ATAPI write command to the optical disc drive 19 (Step S70). When it is determined, based upon the BE flag setting LBA in step S68, that the sector is the BE target LBA, the optical disc drive 19 sequentially records sector data while recording flag information F on the sector head SH (FIG. 3) of the sector (Step S71).

When these steps are completed, the optical disc drive 19 supplies a completion signal to the ATAPI driver 19-1 (Step S72), and the ATAPI driver 19-1 supplies a write completion signal to the application section 10-1 (Step S73).

Thus, the stream (content image) supplied from the delivery server S is rapidly recorded on the recording medium of the optical disc D or the like based upon the LBA management table 141 supplied together with the stream.

Here, the BE encrypting and decoding processing is not performed in the flowchart shown in FIG. 10. This is because of such a thought that the structure of the recording and reproducing apparatus such as the hard disc recorder 10 is relatively secure and the stream is safe even if the BE encrypting and decoding processing putting a burden on the processing is omitted.

However, when a recording and playing apparatus such as the hard disc recorder 10 is, for example, a PC (personal computer) and it is determined that the PC is exposed to the threat of illegal content acquisition conducted by a third party, security is ensured by performing the original BE encrypting and decoding processing, such as shown by a flowchart in FIG. 11 shown below.

### (Case that encrypting and decoding processing is performed)

Next, a recording processing including BE encrypting and decoding processing using a BE-compliant target LBA management table will be explained using a flowchart in FIG. 11 will be explained. Here, explanation of steps similar to those in the flowchart shown in FIG. 10 is omitted and only a different step will be explained.

That is, in Step S81, when the application section 10-1 determines, based upon the management table of BE-compliant target LBA, that the sector data is data on the encryption target region, it encrypts the sector data in the BE cipher management section 42 (Step S82). However, when the application section 10-1 determines, based upon the LBA list, that the sector data is data on a non-encryption target region, it does not encrypt the sector data.

Next, the application section 10-1 supplies the encrypted sector data to the ATAPI driver 19-1 and the ATAPI driver 19-1 supplies an ATAPI write command to the optical disc drive 19 (Step S83). When it is determined, based upon the BL flag setting LBA stored in Step S68, that the sector data is the BE target LBA-compliant data, the optical disc drive 19 sets flag information F in the sector header SH of the sector data. The optical disc drive 19 sequentially conducts BE encoding of the encrypted sector data supplied to record the decoded sector data (Step S85).

By utilizing the BE target LBA management table 141 supplied from the delivery server S to perform the BE encrypting and decoding processing to stream data on the encryption target region in this manner, security of the stream data can be realized by low-loaded processing or task.

## Claims

1. A recording apparatus **characterized by** comprising:
a receiving section (10-1, S62) which receives a stream and address information indicating an encryption target region of the stream; and
a recording section (19, S71) which records the stream on each sector of a recording medium and records management information on a sector header of the sector where data on the encryption target region is recorded.

2. The recording apparatus according to claim 1, **characterized in that** the management information is a BE flag.

3. The recording apparatus according to claim 1, **characterized by** further comprising:
an encrypting section (S82) which encrypts data of the stream on the encryption target region based upon the address information to supply the same to a bus; and
a decoding section (S85) which receives the encrypted data via the bus to decode the encrypted data and supply the same to the recording section.

4. The recording apparatus according to claim 3, **characterized in that** the encrypting section (S82) encrypts the stream according to BusEncryption of AACS standards.

5. The recording apparatus according to claim 1, **characterized in that** the address information is an LBA management table.

6. A recording method **characterized by** comprising:
Receiving (S62) a stream and address information indicating an encryption target region of the stream; and
recording (S71) the stream on each sector on a recording medium and recording management information on a sector header of the sector on which data of the encryption target region is recorded.

7. The recording method according to claim 6, **characterized in that** the management information is a BE flag.

8. The recording method according to claim 6, **characterized by** further comprising:
encrypting (S82) data on the encryption target region of the stream based upon the address information; and
receiving the encrypted data via a bus and decoding the encrypted data to record (S85) the same on the sector on the recording medium.

9. The recording method according to claim 8, **characterized in that**
the encrypting processing encrypts the stream according to BusEncryption of AACS standards.

10. A server apparatus which supplies (S62) a stream and address information indicating an encryption target region of the stream to an external device via a communication path.
